# EUROPEAN PATENT SPECIFICATION

(11) **EP 2 796 302 B1**
(45) Date of publication and mention of the grant of the patent: **14.06.2017**
(21) Application number: 14162897.4
(22) Date of filing: 31.03.2014
(51) Int. Cl.: B60C 25/13

(54) **Bead breaking unit for tyre changing machines**
Reifenwulstabdrückvorrichtung für Reifenwechselmaschinen
Unité de démonte-talons pour machines de changement de pneus

(30) Priority: 23.04.2013 IT MO20130110
(43) Date of publication of application: 29.10.2014
(73) Proprietor: Giuliano Group S.p.A., 42015 Correggio (RE) (IT)
(72) Inventor: Bonacini, Maurizio, 42015 Correggio (RE) (IT)
(74) Representative: Brunacci, Marco

(56) References cited:
- EP-A1- 1 607 247
- WO-A1-2008/132567
- US-A- 4 760 871

## Description

The present invention relates to a bead breaking unit for tyre changing machines.

Tyre changing machines are commonly used for fitting/removing vehicle wheel tyres to/from respective rims.

As is known, before being able to completely remove a tyre from its housing on the respective rim, it is necessary to detach the beads thereof from the bead retention edges on the rim itself.

This operation is performed by means of a suitable bead breaking unit, normally present on the tyre changing machine itself.

Bead breaking units of known type comprise an arm with a first extremity hinged to the bed of the tyre changing machine according to a substantially vertical axis and a second extremity having a bead breaking tool, otherwise known as blade.

On the bed is fastened a resting element, usable to correctly fit the rim during the bead breaking operation.

This resting element has a resting surface, otherwise known as pad, which is made of suitable material, and usually knurled in such a way as to increase the friction coefficient with the wheel.

The bead breaking units of known type generally comprise a linear actuator of the type, e.g., of a fluid actuator cylinder for moving the arm.

During use, an operator suitably positions the portion of the wheel to undergo bead breaking in correspondence to the pad and positions the blade in contact with a section of the tyre bead.

Subsequently, the operator starts the actuator cylinder and the blade pushes the tyre bead, detaching it from the rim edge.

Subsequently, the blade inserted between tyre and rim is extracted.

Bead breaking units are also known having a suitable device for positioning the bead breaking blade on two or more predefined angular positions with respect to the bead resting surface.

In particular, the inclination of the blade can be set according to the particular type of tyre to undergo bead breaking.

Generally, in fact, the need is felt to vary the inclination of the blade according to the hardness of the tyre to undergo bead breaking.

In particular, for a wheel with a harder tyre, it could be convenient to set a reduced angle of incidence (generally close to 21°), so as to apply a pressure along a narrower and more defined portion of the tyre, in the proximity of the edge of the rim.

For a wheel with a softer tyre, on the other hand, it could be convenient to set a greater angle of incidence (generally close to 27°), so as to apply a pressure along a wider portion of the tyre to favour detachment from the rim edge while stressing the tyre as little as possible.

Bead breaking units are in fact known with an operating head having two different blades, arranged with different angular positions, wherein the operating head can be rotated to position each of the two blades alternately in the work position.

The use is also known of bead breaking units having a tilting blade, suitable for varying its inclination, in contrast to the action of one or more springs, during the pressure applied on a tyre.

In particular, such tilting makes it easier to fit the blade between the tyre bead and the edge of the rim.

Generally speaking, in case of need, such tilting can be locked by means of a suitable pin lock.

Nevertheless, the bead breaking units of known type are susceptible to upgrading, aimed in particular at achieving an optimum bead breaking according to the particular type of tyre to undergo bead breaking.

The main aim of the present invention is to provide a bead breaking unit for tyre changing machines or the like which allows an optimum bead breaking depending on the particular type of tyre to undergo bead breaking.

Document WO 2008/132567 A1 discloses a pressing apparatus, suitable for pressing the sides of tyres, comprising a supporting element, a pressing disc freely mounted rotating on an arm which can be fitted to the supporting element, wherein the arm is fitted to the supporting element in a way that can be chosen between a fixed configuration and an oscillating configuration.

Document EP 1 607 247 A1 discloses a bead breaker device comprising an arm able to slide horizontally along a sliding axis, an orientable bead breaker tool associated with an end of the arm and suitable for breaking the bead of a tire of a wheel removably fixed onto rotary support and locking means of the rim, actuation means suitable for orienting the tool between a first thrusting configuration and a second penetration configuration, where the actuation means comprise a thrusting body and elastic means cooperating with the tool, wherein the thrusting body is able to be actuated between a first extension position in contrast to the action of the elastic means and a second release position in which the force exerted by said elastic means prevails.

Another object of the present invention is to provide a bead breaking unit for tyre changing machines which permits a simpler and faster adjustment of blade inclination and/or tilting.

Another object of the present invention is to provide a bead breaking unit for tyre changing machines which allows overcoming the mentioned drawbacks of the state of the art within the ambit of a simple, rational, easy and effective to use as well as low cost solution.

The above objects are achieved by the present bead breaking unit for tyre changing machines according to claim 1. Other characteristics and advantages of the present invention will become more evident from the description of a preferred, but not sole, embodiment of a bead breaking unit for tyre changing machines, illustrated purely as an example but not limited to the annexed drawings in which:
Figure 1 is an axonometric view of the bead breaking unit according to the invention fitted on a conventional tyre changing machine;
Figure 2 is a top view of the bead breaking unit according to the invention with the bead breaking tool in a first predefined angular position;
Figure 3 is an axonometric view of the bead breaking unit according to the invention with the bead breaking tool in a first predefined angular position;
Figure 4 is a top view of the bead breaking unit according to the invention with the bead breaking tool in a second predefined angular position;
Figure 5 is an axonometric view of the bead breaking unit according to the invention with the bead breaking tool in a second predefined angular position;
Figure 6 is a top view showing different tilting positions of the bead breaking unit according to the invention;
Figure 7 is an axonometric view showing the bead breaking unit according to the invention in an idle position;
Figure 8 is an axonometric view showing the bead breaking unit according to the invention in a tilted position due to the action of the tilting means;
Figure 9 is a top view of the bead breaking unit according to the invention with the tilting means deactivated;
Figure 10 is an axonometric view of the bead breaking unit according to the invention with the tilting means deactivated;
Figure 11 is a top view of the lower plate of the supporting element of the bead breaking unit according to the invention.

With particular reference to such figures, globally indicated by 1 is a bead breaking unit which can be fitted on tyre changing machines of known type and usable for the first detachment of the bead of the tyre from the respective rim of a wheel, before the fitting/removing operation of the tyre itself.

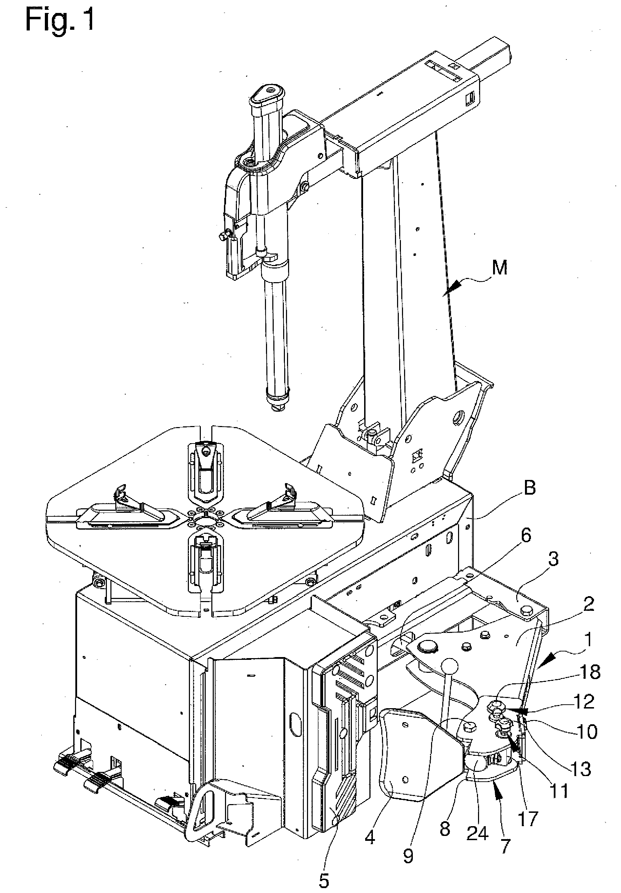

The bead breaking unit 1 can be fitted e.g. on a conventional tyre changing machine M of the type shown in figure 1.

The bead breaking unit 1 comprises an arm 2 with a first extremity hinged to a supporting structure 3 and revolving around a substantially vertical hinging axis, and a second extremity having a bead breaking tool 4.

The bead breaking tool 4 can be composed, e.g., of a conventional bead breaking blade.

The supporting structure 3 can be fixed, e.g., to the bed B of the tyre changing machine M.

To the bed B is fixed a suitable resting surface 5, otherwise called pad, usable for the correct positioning of a wheel to undergo bead breaking.

The arm 2 is suitable for oscillating between a disengaging position, wherein the blade 4 is substantially spaced apart from the resting surface 5, and an operating position, wherein the blade 4 is placed substantially close to the resting surface 5 and is suitable for engaging on one side of the tyre of a wheel to undergo bead breaking.

The bead breaking unit 1 also comprises movement means 6, composed e.g. of a linear actuator, operatively associated with the arm 2 and suitable for moving it from the disengaging position to the operating position.

The bead breaking unit 1 also has tilting means for tilting the blade 4, altogether indicated in the illustrations by the reference 7, suitable for allowing the partial rotation of the blade 4 when this is engaged on the tyre.

In practice, such tilting makes it easier to fit the blade 4 between the tyre bead and the edge of the rim.

In particular, the tilting means 7 comprise a sustaining element 8 which supports the blade 4 and which is associated with the free extremity of the arm 2 revolving around a tilting axis X.

With particular reference to the embodiment of the bead breaking unit 1 shown in the illustrations, the sustaining element 8 is composed of a pair of integral plates, parallel and distanced from each other, hinged at the free extremity of the arm 2 by means of a pin 9, in correspondence to the tilting axis X.

The tilting means 7 also comprise at least a flexible element 10, preferably composed of a spring, placed between a portion of the sustaining element 8 and a portion of the arm 2 and suitable for operating in contrast to the rotation of the sustaining element itself when the blade 4 is engaged and applies a pressure on the side of a tyre to undergo bead breaking.

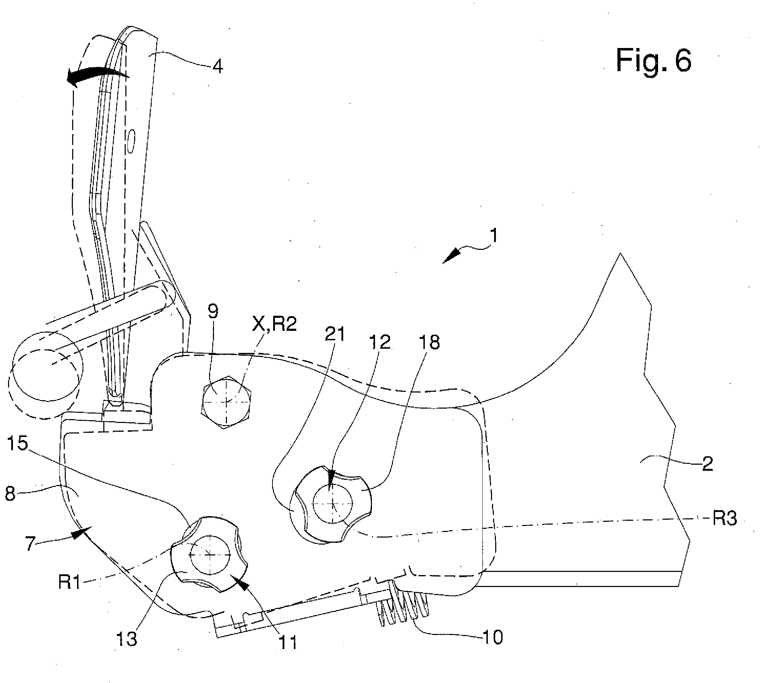

The partial rotation of the sustaining element 8 in contrast to the spring 10 is shown by way of example in the figure 6.

Advantageously, the bead breaking unit 1 comprises adjustment means 11 suitable for adjusting the angular position of the blade 4 and activation/deactivation means 12 suitable for activating/deactivating the tilting means 7.

In particular, the adjustment of the angular position of the blade 4 and the activation/deactivation of tilting can be carried out according to the dimensions and/or the hardness and/or the particular type of tyre to undergo bead breaking.

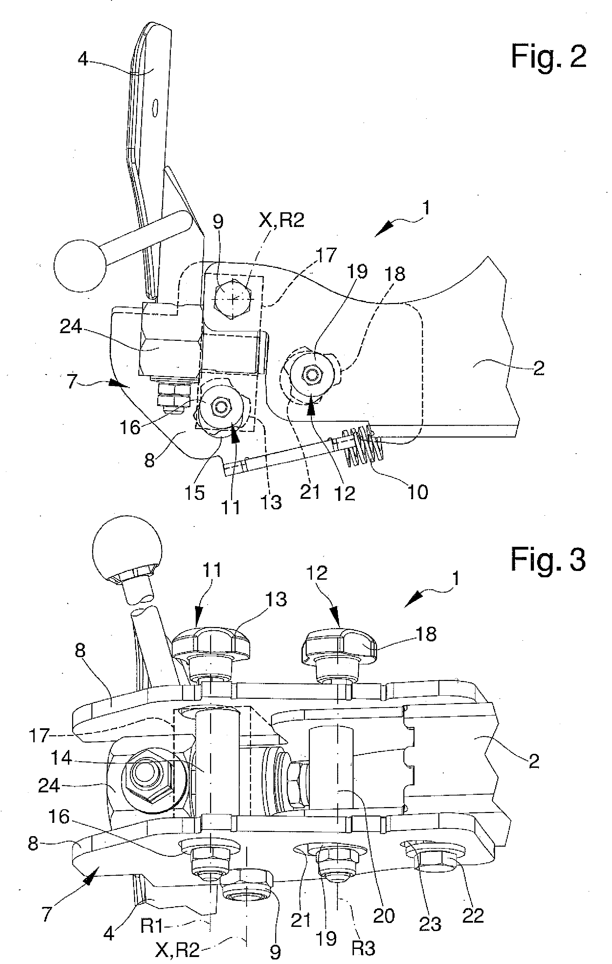

In particular, for a wheel with a soft tyre, it could be convenient to set a greater angle of incidence (generally close to 27°), so as to apply a pressure along a more ample portion of the tyre and to favour its detachment from the edge of the rim, thereby stressing the tyre as little as possible (figures 2 and 3).

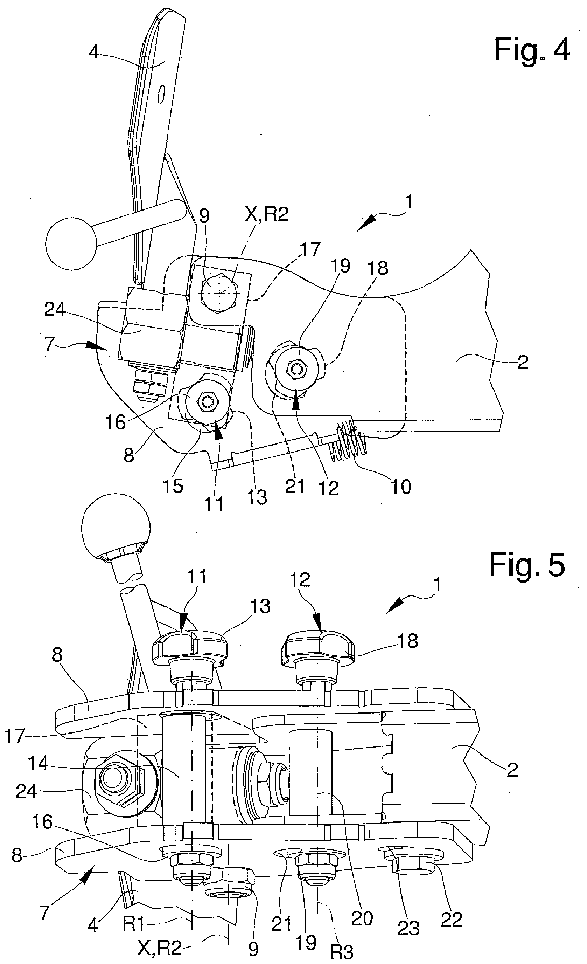

For a wheel with a harder tyre, instead, it might be convenient to set a reduced angle of incidence (generally close to 21°), so as to apply a pressure along a narrower and more defined portion of the tyre, in the proximity of the edge of the rim (figures 4 and 5).

This permits performing optimum bead breaking in accordance with the particular type of tyre to undergo bead breaking.

In particular, the adjustment means 11 are suitable for varying the angle of incidence of the blade 4 with respect to the resting surface 5.

With reference to the particular embodiment of the bead breaking unit 1 shown in the illustrations, the adjustment means 11 comprise a first operating element 13, having a grip, operatively associated with the blade 4 and which can be operated to vary the angular position of the blade itself.

The first operating element 13 can consist, e.g., of a first grip knob.

The first knob 13 is associated revolving around the sustaining element 8 and the adjustment means 11 comprise transformation means for transforming the rotary motion of the first knob 13 into a rotary motion of the blade 4.

For example, such means of transformation comprise a first eccentric element 14 having the first knob 13 and revolving around a first rotation axis R1.

In particular, with reference to the preferred but not sole embodiment shown in the illustrations, the transformation means of the rotary motion of the first knob 13 into the rotary motion of the blade 4 are composed of a crank mechanism, where the first eccentric element 14 is composed of a first pin which extends between the plates of the sustaining element 8.

The first pin 14, besides being eccentric and revolving around the first rotation axis R1, is associated translatable with the sustaining element 8 along at least one direction of translation.

In particular, the sustaining element 8 has guide means 15 suitable for guiding the first pin 14 along a direction of translation.

In particular, the guide means 15 are composed of a pair of first elongated slots made in correspondence to respective portions of each of the plates of the sustaining element 8.

Inside each of the first slots 15, respective first crank arm supports 16 of the first pin 14 are housed.

In particular, the first knob 13 is fastened to the first support 16 associated with the upper plate of the sustaining element 8.

A supporting element 17 of the blade 4, with a substantially elongated shape, has a first extremity associated revolving with the arm 2, in correspondence to a second rotation axis R2, and a second extremity having a housing suitable for housing the first pin 14 to measure and rotatable.

Consequently, the rotation of the first knob 13 involves the rotation of the first pin 14 around the first rotation axis R1 and, at the same time, the translation of the first supports 16 inside the respective first slots 15, thereby allowing the adjustment of the angular position of the supporting element 17 and, consequently, the adjustment of the angular position of the blade 4.

By way of example, in the figures 2 and 3 and in the figures 4 and 5 two possible predefined extreme angular positions of the blade 4 are shown respectively.

Usefully, the activation/deactivation means 12 comprise a second operating element 18 operatively associated with the tilting means 7 and which can be operated to activate/deactivate the tilting means themselves.

Preferably, the second operating element 18 is composed of a second grip knob.

In particular, the activation/deactivation means 12 comprise at least a second eccentric element 19 having a second knob 18, revolving around a third rotation axis R3 between a release position, wherein the tilting means 7 are activated, and a locking position, wherein the tilting means 7 are deactivated.

Consequently, with the second eccentric element 19 in the release position, the rotation of the sustaining element 8 is allowed in contrast to the spring 10, while with the second eccentric element 19 in locking position, the free rotation is prevented of the sustaining element 8 which is therefore fixed and integral with respect to the arm 2.

In particular, when it is in the locking position, the second eccentric element 19 is suitable for engaging in correspondence to a respective reference portion of the sustaining element 8 to prevent the sustaining element itself from rotating free around the tilting axis X.

In particular, with reference not only to the preferred embodiment shown in the illustrations, the activation/deactivation means 12 are composed of a crank mechanism, where the second eccentric element 19 is composed of a pair of second supports suitable for supporting, in correspondence to the opposite extremities, a second pin 20 which extends between the plates of the sustaining element 8.

The second pin 20 is axially revolving around the third rotation axis R3 and the second supports 19 are housed inside the respective second slots 21 made in correspondence to respective portions on each of the plates of the sustaining element 8.

The second knob 18 is fastened to the second support 19 associated with the upper plate of the sustaining element 8.

When, by means of the rotation of the second knob 18, the second supports 19 are rotated and arranged in the locking position, each of them is suitable for engaging in correspondence to a respective section of the inner edge of each of the slots 21, to prevent the sustaining element 8 from rotating free around the tilting axis X.

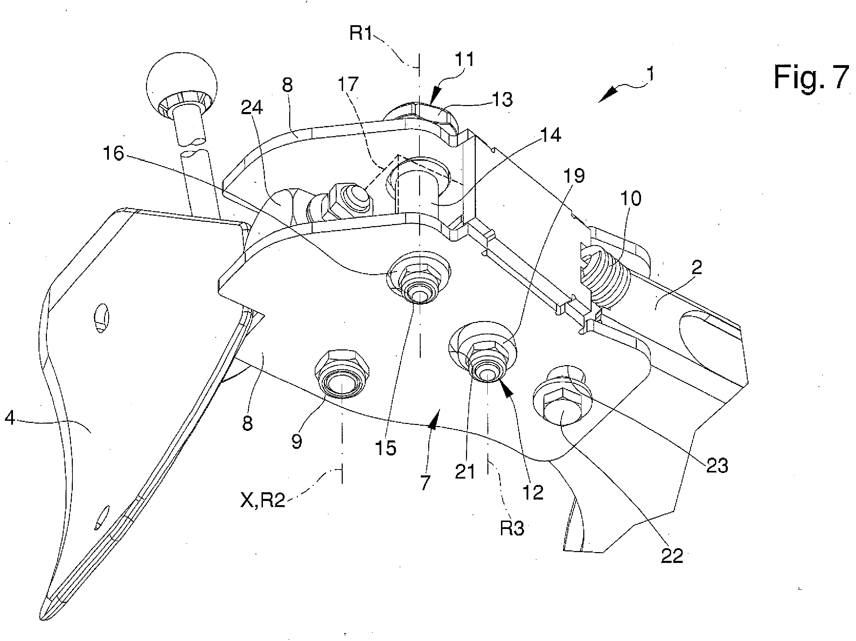

In particular, the figure 7 shows the bead breaking unit 1 in an idle position, with the activation/deactivation means 12 in the release position.

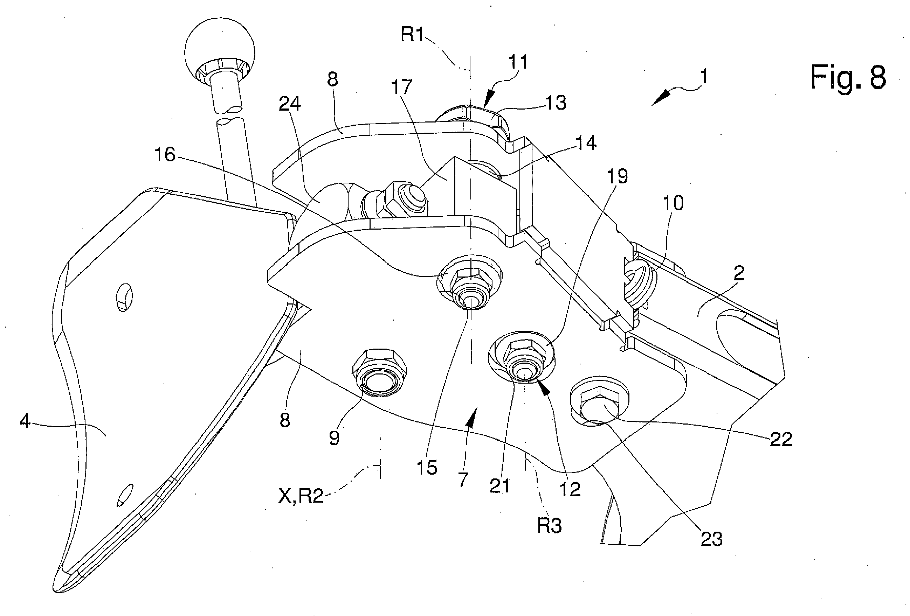

The figure 8 instead shows the bead breaking unit 1 in a tilted position due to the action of the tilting means, with the activation/deactivation means 12 in the release position.

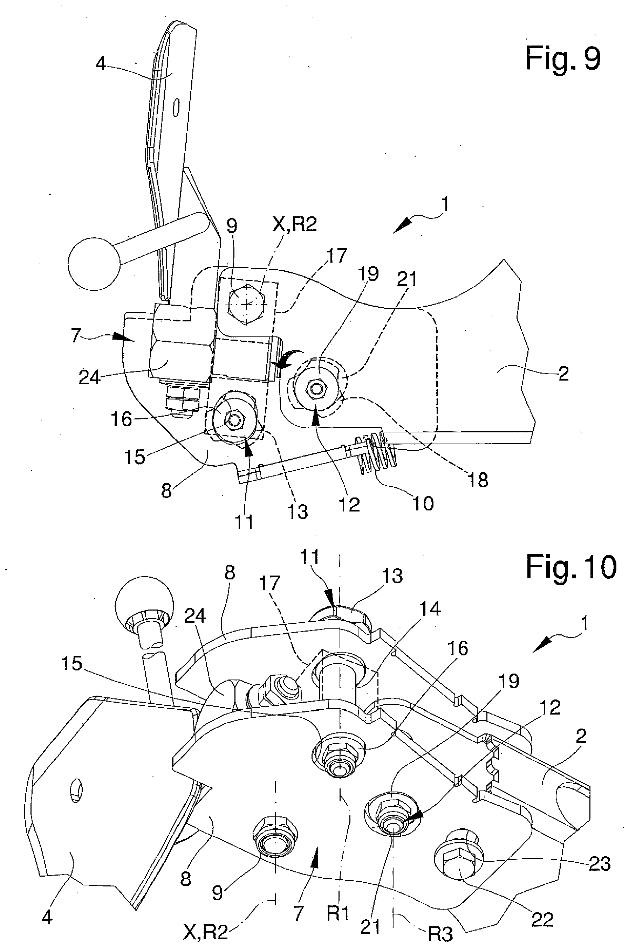

Furthermore, the figures 9 and 10 show the bead breaking unit 1 with the activationldeactivation means 12 in the locking position.

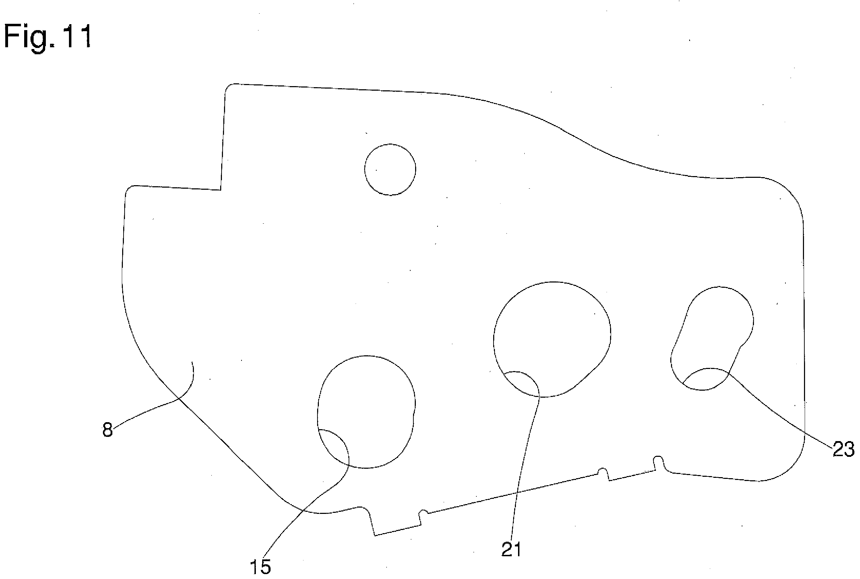

By way of example, the figure 11 shows, in detail, possible and preferred conformations of the first, the second and the third slots 15, 21 and 23 made on the plates of the sustaining element 8.

Usefully, the stroke of the sustaining element 8 during the rotation around the tilting axis X is restricted by the action of a third pin 22, fastened in correspondence to a lower portion of the arm 2, fitted sliding inside a third slot 23, elongated and curvilinear, made along a portion of the lower plate of the sustaining element 8, and suitable for engaging in correspondence to the edges of the opposite extremities of the third slot 23.

Usefully, the bead breaking unit 1 has at least a joint 24, placed between the supporting element 17 and the blade 4, suitable for permitting further variations of the orientation of the blade itself.

It has in practice been ascertained how the described invention achieves the proposed objects.

## Claims

1. Bead breaking unit (1) for tyre changing machines, comprising at least one arm (2) associated revolving with a supporting structure (3), at least a bead breaking tool (4) associated with said arm (2), at least one resting surface (5) of a tyre of a wheel to undergo bead breaking, movement means (6) operatively associated with said arm (2) and suitable for moving said arm (2) from a disengaging position, wherein said bead breaking tool (4) is substantially moved away from said tyre, to an operating position, wherein said bead breaking tool (4) is suitable for engaging on said tyre, said arm (2) having tilting means (7) of said bead breaking tool (4) suitable for allowing the partial rotation of said bead breaking tool (4) when it is engaged on said tyre and activation/deactivation means (12) of said tilting means (7), **characterized in that** it comprises adjustment means (11) for varying the angle of incidence of said bead breaking tool (4) with respect to said resting surface (5) according to the dimensions and/or the hardness and/or the particular type of tyre to undergo bead breaking.

2. Bead breaking unit (1) according to claim 1, **characterized in that** said adjustment means (11) comprise at least a first operating element (13) operatively associated with said bead breaking tool (4) and which can be operated to vary the angular position of said bead breaking tool (4).

3. Bead breaking unit (1) according to the claim 2, **characterized in that** said first operating element (13) is associated revolving with said arm (2) and said adjustments means (11) comprise transformation means (14, 15, 16, 17) for transforming the rotary motion of said operating element into a rotary motion of said bead breaking tool (4).

4. Bead breaking unit (1) according to claim 3, **characterized in that** said transformation means (14, 15, 16, 17) comprise at least a first eccentric element (14) having said first operating element (13) and revolving around a first rotation axis (R1).

5. Bead breaking unit (1) according to claim 4, **characterized in that** said transformation means (14, 15, 16, 17) comprise at least a supporting element (17) of said bead breaking tool (4), with a substantially elongated shape, with a first extremity associated revolving with said arm (2) in correspondence to a second rotation axis and with a second extremity having a housing suitable for housing rotatable said first eccentric element (14).

6. Bead breaking unit (1) according to one or more of claims 4 and 5, **characterized in that** said first eccentric element (14) is associated translatable with said arm (2) along at least a direction of translation.

7. Bead breaking unit (1) according to claim 6, **characterized in that** it comprises guide means (15) for guiding the translation of said first eccentric element (14) along said direction of translation.

8. Bead breaking unit (1) according to one or more of the preceding claims, **characterized in that** said tilting means (7) comprise at least a flexible element (10) placed between said bead breaking tool (4) and said arm (2) and suitable for operating in contrast to the rotation of said bead breaking tool (4) when it is engaged on said tyre.

9. Bead breaking unit (1) according to one or more of the preceding claims, **characterized in that** said activation/deactivation means (12) comprise at least a second operating element (18) operatively associated with said tilting means (7) and which can be operated to activate/deactivate said tilting means (7).

10. Bead breaking unit (1) according to claim 9, **characterized in that** said activation/deactivation means (12) comprise at least a second eccentric element (19) having said second operating element (18), revolving around a third rotation axis (R3) between a release position, wherein said tilting means (7) are activated, and a locking position, wherein said tilting means (7) are deactivated.

11. Bead breaking unit (1) according to claim 10, **characterized in that** said tilting means (7) comprise at least a sustaining element (8) revolving around a tilting axis (X) and suitable for sustaining said bead breaking tool (4) and **in that**, when positioned in said locking position, said second eccentric element (19) is suitable for engaging in correspondence to a respective reference portion of said sustaining element (8) to prevent said sustaining element (8) from rotating free around said tilting axis (X).

12. Bead breaking unit (1) according to claim 11, **characterized in that** said sustaining element (8) comprises at least an elongated slot (21) for housing said second eccentric element (19), said reference portion being made up of at least a section of the inner edge of said elongated slot.

## Patentansprüche

1. Abdrückeinheit (1) für Reifenwechselmaschinen, umfassend mindestens einen Arm (2), der drehbar mit einer Haltestruktur (3) verbunden ist, mindestens ein Abdrückwerkzeug (4), das mit dem Arm (2) verbunden ist, mindestens eine Aufliegefläche (5) eines einem Abdrücken zu unterziehenden Reifens eines Rades, Bewegungsmittel (6), das operativ mit dem Arm (2) verbunden ist und sich zum Bewegen des Arms (2) aus einer ausgerückten Position eignet, wobei das Abdrückwerkzeug (4) im Wesentlichen vom Reifen in eine Betriebsposition wegbewegt wird, wobei das Abdrückwerkzeug (4) sich zum Eingreifen in den Reifen eignet, der Arm (2) Neigungsmittel (7) des Abdrückwerkzeugs (4) hat, das sich dafür eignet, die Teilrotation des Abdrückwerkzeugs (4) zu ermöglichen, wenn es in den Reifen und Aktivierungs-/Deaktivierungsmittel (12) der Neigungsmittel (7) eingreift,
**dadurch gekennzeichnet, dass** sie
Einstellmittel (11) zum Variieren des Einfallswinkels des Abdrückwerkzeugs (4) in Bezug auf die Aufliegefläche (5) entsprechend den Abmessungen und/oder der Härte und/oder des speziellen Typs von Reifen umfasst, die sich einem Abdrücken unterziehen.

2. Abdrückeinheit (1) nach Anspruch 1, **dadurch gekennzeichnet, dass** die Einstellmittel (11) mindestens ein erstes Betriebselement (13) umfassen, das operativ mit dem Abdrückwerkzeug (4) verbunden ist und das betrieben werden kann, um die Winkelposition des Abdrückwerkzeugs (4) zu variieren.

3. Abdrückeinheit (1) nach Anspruch 2, **dadurch gekennzeichnet, dass** das erste Betriebselement (13) drehbar mit dem Arm (2) verbunden ist, und die Einstellmittel (11) Transformationsmittel (14, 15, 16, 17) zum Transformieren der Drehbewegung des Betriebselementes in eine Drehbewegung des Abdrückwerkzeugs (4) umfassen.

4. Abdrückeinheit (1) nach Anspruch 3, **dadurch gekennzeichnet, dass** die Transformationsmittel (14, 15, 16, 17) mindestens ein exzentrisches Element (14) umfassen, das das erste Betriebselement (13) umfasst und um eine erste Rotationsachse (R1) drehbar ist.

5. Abdrückeinheit (1) nach Anspruch 4, **dadurch gekennzeichnet, dass** die Transformationsmittel (14, 15, 16, 17) mindestens ein Halteelement (17) des Abdrückwerkzeugs (4) umfassen, mit einer im Wesentlichen gestreckten Gestalt, mit einer ersten Extremität, die drehbar mit dem Arm (2) verbunden ist in Übereinstimmung mit einer zweiten Rotationsachse, und mit einer zweiten Extremität, die ein Gehäuse hat, das sich dafür eignet, das erste exzentrische Element (14) drehbar aufzunehmen.

6. Abdrückeinheit (1) nach einem der Ansprüche 4 und 5, **dadurch gekennzeichnet, dass** das erste exzentrische Element (14) entlang mindestens einer Verschiebungsrichtung verschiebbar mit dem Arm (2) verbunden ist.

7. Abdrückeinheit (1) nach Anspruch 6, **dadurch gekennzeichnet, dass** sie Führungsmittel (15) zum Führen der Verschiebung des ersten exzentrischen Elementes (14) entlang der Verschiebungsrichtung umfasst.

8. Abdrückeinheit (1) nach einem der vorherigen Ansprüche, **dadurch gekennzeichnet, dass** die Neigungsmittel (7) mindestens ein flexibles Element (10) umfassen, das zwischen dem Abdrückwerkzeug (4) und dem Arm (2) platziert ist und sich zum Betreiben im Gegensatz zur Rotation des Abdrückwerkzeugs (4) eignet, wenn es im Eingriff mit dem Reifen ist.

9. Abdrückeinheit (1) nach einem der vorherigen Ansprüche, **dadurch gekennzeichnet, dass** die Aktivierungs-/Deaktivierungsmittel (12) mindestens ein zweites Betriebselement (18) umfassen, das operativ mit den Neigungsmitteln (7) verbunden ist und das betrieben werden kann, um die Neigungsmittel (7) zu aktivieren/deaktivieren.

10. Abdrückeinheit (1) nach Anspruch 9, **dadurch gekennzeichnet, dass** die Aktivierungs-/Deaktivierungsmittel (12) mindestens ein zweites exzentrisches Element (19) umfassen, das ein zweites Betriebselement (18) hat, das um eine dritte Rotationsachse (R3) zwischen einer Freigabeposition, in der die Neigungsmittel (7) aktiviert sind, und einer Sperrposition, in der die Neigungsmittel (7) deaktiviert sind, drehbar ist.

11. Abdrückeinheit (1) nach Anspruch 10, **dadurch gekennzeichnet, dass** die Neigungsmittel (7) mindestens ein stützendes Element (8) umfassen, das um eine Neigungsachse (X) drehbar ist und sich dazu eignet, das Abdrückwerkzeug (4) zu stützen, und dadurch, dass beim Positionieren in der Sperrposition das zweite exzentrische Element (19) sich für den Eingriff in Übereinstimmung mit einem entsprechenden Referenzteil des tragenden Elementes (8) eignet, um zu verhindern, dass das tragende Element (8) frei um die Neigungsachse (X) rotiert.

12. Abdrückeinheit (1) nach Anspruch 11, **dadurch gekennzeichnet, dass** das tragende Element (8) mindestens einen länglichen Schlitz (21) zum Aufnehmen des zweiten exzentrischen Elementes (19) umfasst, wobei der Referenzteil aus mindestens einem Abschnitt der Innenkante des länglichen Schlitzes besteht.

## Revendications

1. Unité de détalonnage (1) pour des machines à changer les pneus, comprenant au moins un bras (2) couplé de manière rotative à une structure de support (3), au moins un outil de détalonnage (4) associé audit bras (2), au moins une surface de repos (5) d'un pneu d'une roue devant subir un détalonnage, des moyens de déplacement (6) associés opérationnellement audit bras (2) et appropriés pour déplacer ledit bras (2) d'une position de dégagement, dans laquelle ledit outil de détalonnage (4) est sensiblement éloigné dudit pneu, à une position opérationnelle, dans laquelle ledit outil de détalonnage (4) est approprié pour se mettre en prise sur ledit pneu, ledit bras (2) ayant des moyens d'inclinaison (7) dudit outil de détalonnage (4) appropriés pour permettre la rotation partielle dudit outil de détalonnage (4) lorsqu'il est mis en prise sur ledit pneu et des moyens d'activation/désactivation (12) desdits moyens d'inclinaison (7),
**caractérisée en ce qu'**elle comprend des moyens d'ajustement (11) pour faire varier l'angle d'incidence dudit outil de détalonnage (4) par rapport à ladite surface de repos (5) selon les dimensions et/ou la dureté et/ou le type particulier de pneu devant subir un détalonnage.

2. Unité de de détalonnage (1) selon la revendication 1, **caractérisée en ce que** lesdits moyens d'ajustement (11) comprennent au moins un premier élément opérationnel (13) associé opérationnellement audit outil de détalonnage (4) et qui peut être utilisé pour faire varier la position angulaire dudit outil de détalonnage (4).

3. Unité de détalonnage (1) selon la revendication 2, **caractérisée en ce que** ledit premier élément opérationnel (13) est couplé de manière rotative audit bras (2) et lesdits moyens d'ajustement (11) comprennent des moyens de transformation (14, 15, 16, 17) pour transformer le mouvement rotatif dudit élément opérationnel en un mouvement rotatif dudit outil de détalonnage (4).

4. Unité de détalonnage (1) selon la revendication 3, **caractérisée en ce que** lesdits moyens de transformation (14, 15, 16, 17) comprennent au moins un premier élément excentrique (14) ayant ledit premier élément opérationnel (13) et tournant autour d'un premier axe de rotation (R1).

5. Unité de détalonnage (1) selon la revendication 4, **caractérisée en ce que** lesdits moyens de transformation (14, 15, 16, 17) comprennent au moins un élément de support (17) dudit outil de détalonnage (4), de forme sensiblement allongée, avec une première extrémité couplée de manière rotative audit bras (2) en correspondance avec un deuxième axe de rotation et avec une seconde extrémité ayant un logement approprié pour loger en rotation ledit premier élément excentrique (14).

6. Unité de détalonnage (1) selon une ou plusieurs des revendications 4 et 5, **caractérisée en ce que** ledit premier élément excentrique (14) est associé translatable audit bras (2) au moins le long d'une direction de translation.

7. Unité de détalonnage (1) selon la revendication 6, **caractérisée en ce qu'**elle comprend des moyens de guidage (15) pour guider la translation dudit premier élément excentrique (14) le long de ladite direction de translation.

8. Unité de détalonnage (1) selon une ou plusieurs des revendications précédentes, **caractérisée en ce que** lesdits moyens d'inclinaison (7) comprennent au moins un élément flexible (10) placé entre ledit outil de détalonnage (4) et ledit bras (2) et approprié pour une opération en opposition avec la rotation dudit outil de détalonnage (4) lorsqu'il est mis en prise sur ledit pneu.

9. Unité de détalonnage (1) selon une ou plusieurs des revendications précédentes, **caractérisée en ce que** lesdits moyens d'activation/désactivation (12) comprennent au moins un second élément opérationnel (18) associé opérationnellement auxdits moyens d'inclinaison (7) et qui peut être utilisé pour activer/désactiver lesdits moyens d'inclinaison (7).

10. Unité de détalonnage (1) selon la revendication 9, **caractérisée en ce que** lesdits moyens d'activation/désactivation (12) comprennent au moins un second élément excentrique (19) ayant ledit second élément opérationnel (18), tournant autour d'un troisième axe de rotation (R3) entre une position de libération, dans laquelle lesdits moyens d'inclinaison (7) sont activés, et une position de verrouillage, dans laquelle lesdits moyens d'inclinaison (7) sont désactivés.

11. Unité de détalonnage (1) selon la revendication 10, **caractérisée en ce que** lesdits moyens d'inclinaison (7) comprennent au moins un élément de soutien (8) tournant autour d'un axe d'inclinaison (X) et approprié pour soutenir ledit outil de détalonnage (4) et **en ce que**, lorsqu'il est positionné dans ladite position de verrouillage, ledit second élément excentrique (19) est approprié pour se mettre en prise en correspondance avec une portion de référence respective dudit élément de soutien (8) pour empêcher ledit élément de soutien (8) de tourner librement autour dudit axe d'inclinaison (X).

12. Unité de détalonnage (1) selon la revendication 11, **caractérisée en ce que** ledit élément de soutien (8) comprend au moins une fente allongée (21) pour loger ledit second élément excentrique (19), ladite portion de référence étant constituée d'au moins une section du bord intérieur de ladite fente allongée.
